# FASCICULE DE BREVET EUROPEEN

(11) **EP 3 928 153 B1**
(45) Date de publication et mention de la délivrance du brevet: **11.09.2024**
(21) Numéro de dépôt: 20703992.6
(22) Date de dépôt: 05.02.2020
(51) Int. Cl.: G02F 1/1333, B60R 11/02

(54) **BOITIER DE MONTAGE POUR DISPOSITIF D'AFFICHAGE ET ENSEMBLE AFFICHEUR COMPORTANT UN TEL BOITIER**
EINBAUGEHÄUSE FÜR EINE ANZEIGEVORRICHTUNG UND ANZEIGEANORDNUNG MIT SOLCH EINEM GEHÄUSE
MOUNTING HOUSING FOR A DISPLAY DEVICE, AND DISPLAY ASSEMBLY COMPRISING SUCH A HOUSING

(30) Priorité: 21.02.2019 FR 1901779
(43) Date de publication de la demande: 29.12.2021
(73) Titulaire: Valeo Comfort and Driving Assistance, 94000 Créteil (FR)
(72) Inventeur: IRZYK, Michael, 94046 Créteil CEDEX (FR); KORCZAK, Stephane, 94046 Créteil CEDEX (FR)
(74) Mandataire: Delplanque, Arnaud
(86) Numéro de dépôt international: PCT/EP2020/052865
(87) Numéro de publication internationale: WO 2020/169345

(56) Documents cités:
- WO-A1-2015/066942
- DE-A1- 102011 056 455
- US-A1- 2012 039 091
- US-A1- 2016 368 379

## Description

### DOMAINE TECHNIQUE AUQUEL SE RAPPORTE L'INVENTION

La présente invention concerne de manière générale le domaine des afficheurs, et en particulier des afficheurs dans le domaine automobile.

Elle concerne plus particulièrement un boîtier de montage pour un dispositif d'affichage comprenant une unité de rétro-éclairage et un écran.

Elle concerne également un ensemble afficheur comportant un tel boîtier de montage.

### ARRIERE-PLAN TECHNOLOGIQUE

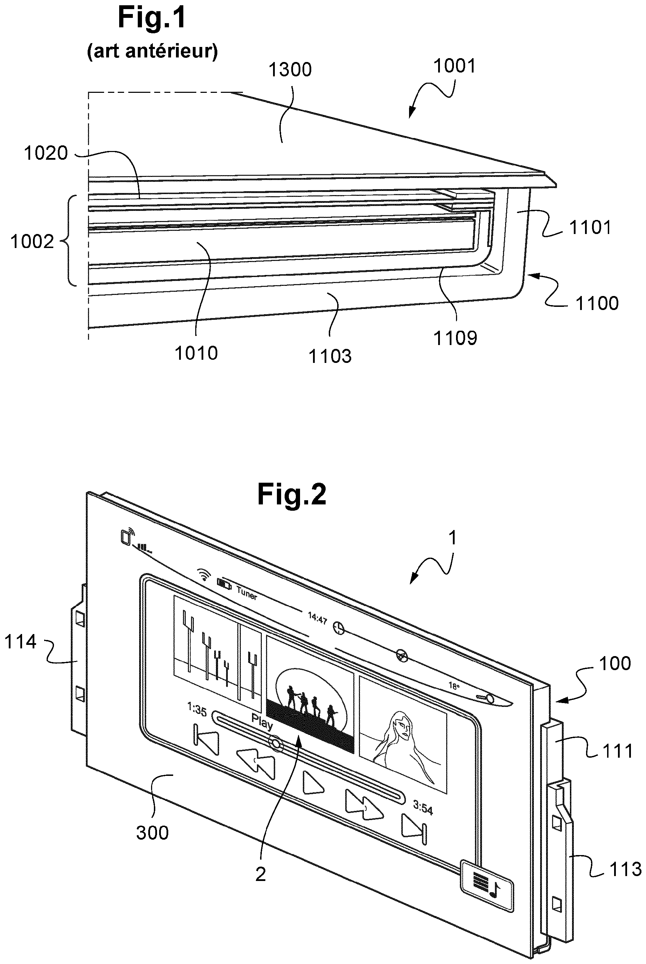

On a représenté sur la figure 1 un ensemble afficheur 1001 de l'art antérieur comportant un dispositif d'affichage 1002 complet (unité de rétro-éclairage 1010 et écran 1020) et une pièce de structure complémentaire 1100 destinée à assurer la rigidité de l'ensemble afficheur 1. Cette structure est ici complétée par un verre de façade 1300 qui vient fermer la pièce de structure complémentaire 1100.

Cette pièce de structure complémentaire est en fait un boîtier de montage 1100 pour le dispositif d'affichage 1002 et comporte :
- une paroi de fond 1103 sensiblement rectangulaire ; et
- une paroi latérale s'élevant depuis la paroi de fond 1103 pour former un premier rebord 1101 et délimiter un logement de réception 1109 destiné à accueillir au moins partiellement ledit dispositif d'affichage 1002.

Le boîtier de montage comporte en outre en général des moyens de montage destinés à coopérer avec des moyens de montage complémentaires du dispositif d'affichage pour fixer au moins l'unité dans le logement de réception.

Cette solution présente l'inconvénient d'un encombrement important avec en particulier une épaisseur non réductible liée à la pièce de structure complémentaire nécessaire pour rigidifier le produit et à l'espace, entre cette pièce de structure et l'arrière de l'unité de rétro-éclairage, nécessaire aux jeux fonctionnels.

On connaît également du document WO2015/066942, un boîtier de montage conformément au préambule de la revendication 1. Un tel agencement présente l'inconvénient de nécessiter une grande précision des jeux fonctionnels permettant l'insertion et le maintien du dispositif.

### OBJET DE L'INVENTION

Afin de remédier aux inconvénients précités de l'état de la technique, la présente invention propose un boîtier de montage pour un dispositif d'affichage permettant avec un encombrement minimal (*i.e.* épaisseur réduite) d'assurer une tenue mécanique satisfaisante (en particulier une bonne résistance à la torsion).

Plus particulièrement, on propose selon l'invention un boîtier de montage tel que défini en introduction, dans lequel lesdits moyens de montage comprennent un deuxième rebord s'élevant à l'intérieur dudit logement depuis la paroi de fond, la hauteur de ce deuxième rebord étant inférieure à la hauteur dudit premier rebord et dont le rapport entre la hauteur du deuxième rebord et la hauteur du premier rebord est compris entre 0,3 et 0,7.

D'autres caractéristiques non limitatives et avantageuses du boîtier de montage conforme à l'invention sont les suivantes :
- ledit premier rebord et le deuxième rebord présentant respectivement une première épaisseur et une deuxième épaisseur, le rapport entre la deuxième épaisseur et la première épaisseur est compris entre 0,3 et 0,9 ;
- la première épaisseur du premier rebord est comprise entre 1 millimètre et 3 millimètres ;
- la distance entre le premier rebord et le deuxième rebord est comprise entre 1 et 2 millimètres ;
- la paroi de fond dudit boîtier de montage présente une épaisseur comprise entre 2 et 3 millimètres ;
- ledit boîtier de montage comporte en outre un cadre métallique adapté à se fixer sur ledit deuxième rebord pour maintenir ladite unité de rétro-éclairage par rapport au boîtier de montage ;
- ledit cadre métallique présente un profil en L inversé ayant une première partie et une deuxième partie, ladite première partie s'insérant dans une gorge formée entre le premier rebord et le deuxième rebord et ladite deuxième partie venant pincer le dispositif de rétro-éclairage contre la paroi de fond ;
- ledit dispositif de rétro-éclairage est entouré à sa périphérie par ledit deuxième rebord.

L'invention propose également un ensemble afficheur comportant un dispositif d'affichage et un boîtier de montage conforme à l'invention et destiné à recevoir ledit dispositif d'affichage.

Avantageusement, ledit ensemble afficheur comporte en outre un verre de façade destiné à fermer le logement de réception dudit boîtier de montage, ledit verre de façade étant fixé au boîtier de montage au niveau dudit premier rebord.

Dans cette configuration, on peut prévoir que ledit écran soit alors situé entre ledit deuxième rebord et ledit verre de façade.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
[Fig. 1] est une vue schématique d'un boîtier de montage de l'art antérieur ;
[Fig. 2] est une vue en perspective avant d'un ensemble afficheur monté dans un boîtier de montage ;
[Fig. 3] est une vue explosée de l'ensemble afficheur de la figure 2 ;
[Fig. 4] est une vue en coupe transversale de l'ensemble afficheur de la figure 2 montrant comment le dispositif d'affichage est monté dans le boîtier de montage ;
[Fig. 5] est une vue partielle en coupe transversale du boîtier de montage de I a figure 4 ;
[Fig. 6] est une vue en perspective arrière de l'ensemble afficheur de la figure 2 avec une pièce de fixation assemblée sur celui-ci ; et
[Fig. 7] est une vue éclatée de la figure 6 montrant l'ensemble afficheur et la pièce de fixation séparés.

Sur la figure 2, on a représenté un ensemble afficheur 1 comportant un dispositif d'affichage 2 monté dans un boîtier de montage 100 selon un mode de réalisation préféré de l'invention.

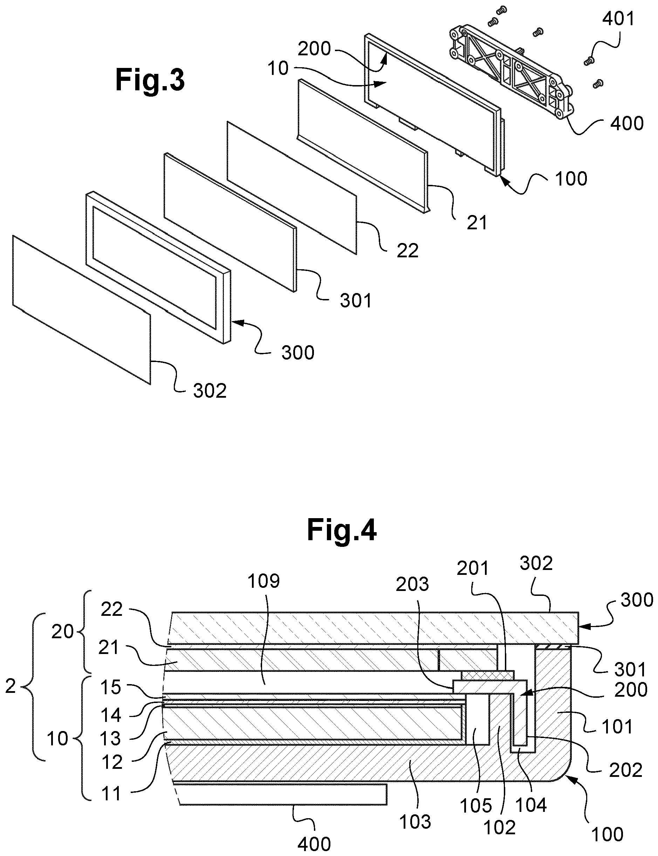

La figure 4 montre comment ce dispositif d'affichage 2 est monté dans ce boîtier de montage 100.

De manière connue, le dispositif d'affichage 2 comporte d'une part une source lumineuse sous la forme d'une unité 10 de rétro-éclairage (« *backlight unit »* en anglais) et, d'autre part, un écran 20.

L'unité 10 de rétro-éclairage est conçue pour illuminer de manière homogène (luminance constante) la surface de l'écran 20 qui est un dispositif actif qui va moduler la lumière le traversant.

Typiquement, et comme cela est visible sur la figure 4, l'unité 10 de rétro-éclairage est formée par l'empilement, les uns sur les autres, de différents composants « optiques » fonctionnels :
- un film réfléchissant 11 (par exemple de type *« Enhanced Specular Reflector »* chez 3M) ;
- un guide de lumière 12 transparent (substrat polycarbonate ou PMMA par exemple) ;
- un film diffuseur 13, par exemple un film texturé ;
- un (ou deux) film(s) de type BEF 14 (« *Brightness Enhancement Film »* de la gamme Vikuiti chez 3M) ; et
- un film de type DBEF 15 *(« Dual Brightness Enhancement Film »* aussi chez 3M).

De préférence, le guide de lumière 12 a ici la forme d'une plaque transparente et est éclairé sur au moins l'une de ses tranches (ici dans le logement 105) par un ensemble *(« barrette »)* de diodes électroluminescentes (LED) blanches (non visibles sur la figure) de sorte que la lumière émise par ces diodes se couple et se propage dans le guide de lumière 12. Cette lumière est réfléchie d'un côté par le film réfléchissant 11 et extraite de l'autre côté par le film diffuseur 13. Elle est ensuite redirigée et polarisée en direction de l'écran 20 grâce aux films de type BEF et DBEF respectivement.

L'écran 20 comprend ici une matrice TFT-LCD 21 (comportant ici au moins un polariseur, non représenté) et une couche de colle transparente 22 (colle silicone ou acrylique du type *« optically clear resin* ») qui permet de fixer l'écran 20 sur un verre de façade 300 de l'ensemble afficheur 1 (voir ci-après).

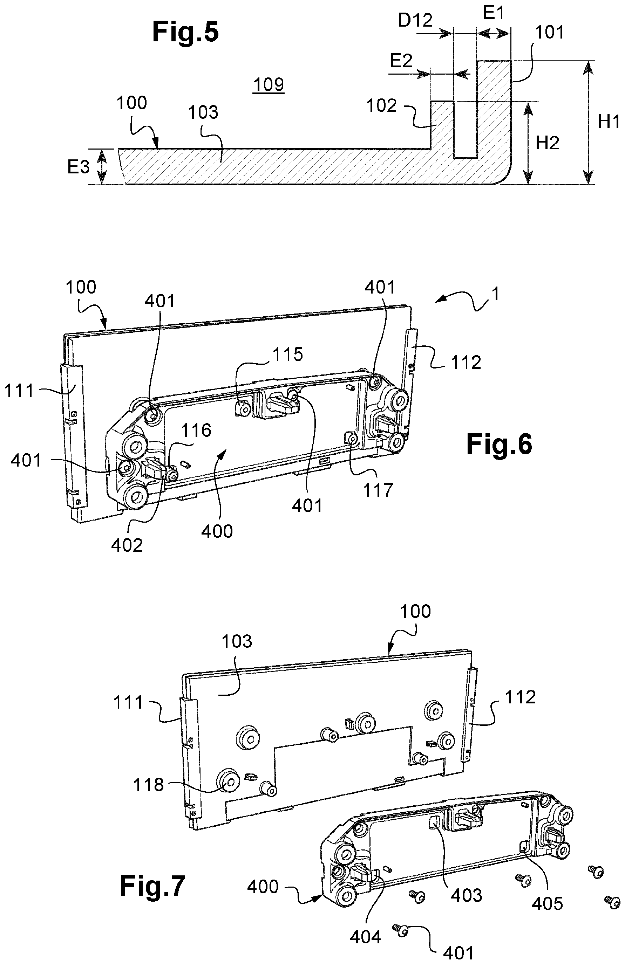

Comme le montrent les figures 4 et 5, le boîtier de montage 100 comporte :
- une paroi de fond 103, ici sensiblement rectangulaire ;
- une paroi latérale s'élevant depuis la paroi de fond 103 pour former un premier rebord 101 (de hauteur H1 et perpendiculaire à la surface de fond 103, cf. figure 5, la hauteur H1 étant mesurée perpendiculairement depuis la face arrière de la paroi de fond 103) et délimiter un logement de réception 109 destiné à accueillir au moins partiellement le dispositif d'affichage 2.

Avantageusement, le boîtier de montage 100 est réalisé en métal (par exemple en magnésium ou en aluminium) et la paroi de fond 103 du boîtier de montage 100 présente une épaisseur E3 (voir fig. 5) comprise entre 2 et 3 millimètres. Cette épaisseur E3 est suffisante pour assurer une bonne rigidité de la paroi de fond 103 afin de résister aux efforts de torsion pouvant s'exercer sur le boîtier de montage 100.

Le boîtier de montage 100 comprend également un deuxième rebord 102 s'élevant à l'intérieur du logement de réception 109 depuis la paroi de fond 103, la hauteur - ici notée H2 (voir fig. 5, H2 est mesurée depuis la face arrière de la paroi de fond 103) - du deuxième rebord 102 étant inférieure à la hauteur H1 du premier rebord 101 du boîtier de montage 100. En d'autres termes, on pourrait dire que le profil périphérique du boîtier de montage 100 est en forme de U asymétrique, les deux rebords représentant les deux branches du U asymétrique.

Ainsi, le deuxième rebord 102 offre une surface d'attache pour un cadre métallique 200 destiné à maintenir l'unité 10 de rétro-éclairage par rapport au boitier de montage 100. Ce deuxième rebord 102 forme donc un moyen de montage du dispositif d'affichage 2 au boîtier de montage 100. Il coopère avec le cadre métallique 200 pour fixer au moins l'unité 10 dans le logement de réception 109 (en formant ici une butée pour l'unité 10 dans la direction d'extension du deuxième rebord 102). Dans le mode de réalisation décrit ici, le dispositif de rétro-éclairage 10 est donc entouré à sa périphérie par le deuxième rebord 102.

Avantageusement, le rapport entre la hauteur H2 du deuxième rebord 102 et la hauteur H1 du premier rebord 101 est compris entre 0,3 et 0,7. Ce rapport de hauteur H2/H1 - qui est ici de 0,69 - permet d'avoir un écart suffisamment important entre le haut du premier rebord 101 et le haut du deuxième rebord 102 pour pouvoir y loger le cadre métallique 200, la mousse 201 et l'écran 20.

De la même manière, le premier rebord 101 et le deuxième rebord 102 présentant respectivement une première épaisseur E1 et une deuxième épaisseur E2 (voir figure 5), le rapport entre la deuxième épaisseur E2 et la première épaisseur E1 est compris entre 0,3 et 0,9.

En pratique, la première épaisseur E1 doit être plus importante que la deuxième épaisseur E2 afin d'assurer une surface de collage de taille suffisante avec le verre de façade 300. En d'autres termes, la deuxième épaisseur E2 forme ici une butée pour le cadre métallique 200.

De préférence, la distance D12 entre le premier rebord 101 et le deuxième rebord 102 (c'est-à-dire la largeur de la gorge 104) est comprise entre 1 et 2 millimètres. Ceci crée un jeu fonctionnel permettant le montage du cadre métallique 200.

Avantageusement, le cadre métallique 200 (parfois appelé « *bezel »* en anglais) présente un profil en « L inversé » ayant une première partie 202 verticale (la jambe du « L » inversé) et une deuxième partie 203 horizontale (le pied du « L » inversé) de manière à venir s'emboîter dans la rainure 104 formée entre les deux rebords 101, 102 (voir fig. 4).

En d'autres termes, la première partie 202 s'insère dans la gorge 104 formée entre le premier rebord 101 et le deuxième rebord 102 et la deuxième partie 203 vient pincer le dispositif de rétro-éclairage 10 contre la paroi de fond 103.

En pratique, pour fixer l'unité 10 de rétro-éclairage dans le boîtier de montage 100, on insère tout d'abord celle-ci dans le logement de réception 109 et on vient monter le cadre métallique 200 sur le deuxième rebord 102, par exemple par clipsage ou par collage.

La partie horizontale 203 du cadre métallique 200 *(i.e.* la base du « L inversé ») repose alors sur le deuxième rebord 102 et vient ici par-dessus le film de type DBEF pour maintenir l'unité 10 en place au fond du logement 109.

Dans un mode de réalisation préféré, on pourrait prévoir que le deuxième rebord 102 soit un élément de support pour les diodes électro-luminescentes de l'unité 10 de rétro-éclairage, ce qui permet une bonne dissipation thermique de la chaleur générée par les diodes.

Une mousse 201 souple de faible dimension, typiquement d'épaisseur inférieure au millimètre, est de préférence collée sur la partie horizontale 203 du cadre métallique 200. Cette mousse 201 doit être en contact avec l'ensemble formé du verre de façade 300 et de l'écran 20 sans toutefois générer de contrainte mécanique trop forte sur la dalle TFT-LCD 21.

Cet ensemble est collé par les bords de cette structure par au moins trois cotés sur l'extrémité libre du premier rebord 101 du boîtier de montage 100. Le collage est réalisé, soit par un adhésif 301 de type double face (comme c'est le cas du mode de réalisation représenté sur la figure 4), soit par une colle structurelle, par exemple une colle silicone UV polymérisé par éclairement UV sur le bord de l'assemblage.

Pour permettre un collage efficace, la première épaisseur E1 du premier rebord 101 est comprise entre 1 millimètre et 3 millimètres. Ceci permet de fournir une surface suffisante pour le collage du verre de façade 300 sur le premier rebord 101.

Avantageusement, le verre de façade 300 peut comprendre un ou plusieurs films fonctionnels, par exemple un film de type *« touch panel »,* un film anti-éblouissement (« *anti-glare film* »), un film polarisant, un film anti-reflet, etc....

Grâce à l'invention, il est possible de réaliser un afficheur automobile d'une épaisseur inférieure à 10 millimètres, par exemple inférieure à 8,2 millimètres (dimension excluant le verre de façade, voir figure 5), supportant des efforts de traction et de torsion compatibles avec certains usages automobiles, et disposant d'une façade complémentaire réalisant une fonction décorative.

De préférence, l'ensemble afficheur 1 comporte un support de fixation 400 tel que représenté sur les figures 6 et 7.

Ce support de fixation 400 permet de centrer et fixer l'ensemble afficheur 1 par exemple sur la planche de bord d'un véhicule automobile.

De plus, une fois fixé, ce support de fixation 400 assure une fonction de rigidification et permet la tenue mécanique de l'ensemble afficheur 1 lorsque celui-ci est soumis à des contraintes mécaniques par déformation de la planche de bord (roulement sur un dos d'âne ou un coussin berlinois par exemple).

Avantageusement, l'arrière de la paroi de fond 103 du boîtier de montage 100 comprend des pions de centrage 115, 116, 117 coopérant avec des moyens de fixation du support de fixation 400, comprenant ici des ouvertures 403, 404, 405 de centrage. Ce support de fixation 400 peut alors être assemblé sur le boîtier de montage 100 au moyen de vis 401 venant se visser dans des puits taraudés 118 dans la paroi de fond 103.

Le support de fixation 400 comprend en outre des moyens de montage sur une planche de bord d'un véhicule automobile, ces moyens de montage incluant ici des ergots 402 (voir figure 6) venant par exemple se clipser dans des trous formés dans la planche de bord.

Le fait que le support de fixation 400 soit indépendant du boîtier de montage 100 permet de réaliser un choix et une variété dans le type de fixation finale utilisé pour l'ensemble afficheur 1 sur la planche de bord.

## Revendications

1. Boîtier de montage (100) pour un dispositif d'affichage (2) comprenant une unité (10) de rétro-éclairage et un écran (20), ledit boîtier de montage (100) comportant :
- une paroi de fond (103) ;
- une paroi latérale (101) s'élevant depuis la paroi de fond (103) pour former un premier rebord (101) et délimiter un logement de réception (109) destiné à accueillir au moins partiellement ledit dispositif d'affichage (2) ;
- des moyens de montage (102) destinés à coopérer avec des moyens de montage complémentaires (200) dudit dispositif d'affichage (2) pour fixer au moins ladite unité (10) dans ledit logement de réception, lesdits moyens de montage comprenant un deuxième rebord (102) s'élevant depuis la paroi de fond (103), la hauteur (H2) du deuxième rebord (102) étant inférieure à la hauteur (H1) dudit premier rebord (101), de sorte que le profil périphérique du boîtier de montage (100) est en forme de U asymétrique, les deux rebords représentant les deux branches du U asymétrique,
**caractérisé en ce que** le deuxième rebord (102) s'élève à l'intérieur dudit logement de réception (109), le rapport entre la hauteur (H2) du deuxième rebord (102) et la hauteur (H1) dudit premier rebord (101) étant compris entre 0,3 et 0,7.

2. Boîtier de montage (100) selon la revendication 1, dans lequel, ledit premier rebord (101) et le deuxième rebord (102) présentant respectivement une première épaisseur (E1) et une deuxième épaisseur (E2), le rapport entre la deuxième épaisseur (E2) et la première épaisseur (E1) est compris entre 0,3 et 0,9.

3. Boîtier de montage (100) selon l'une des revendications 1 ou 2, dans lequel la première épaisseur (E1) du premier rebord est comprise entre 1 millimètre et 3 millimètres.

4. Boîtier de montage (100) selon l'une des revendications 1 à 3, dans lequel la distance (D12) entre le premier rebord (101) et le deuxième rebord (102) est comprise entre 1 et 2 millimètres.

5. Boîtier de montage (100) selon l'une des revendications 1 à 4, dans lequel la paroi de fond (103) dudit boîtier de montage (100) présente une épaisseur comprise entre 2 et 3 millimètres.

6. Boîtier de montage (100) selon l'une des revendications 1 à 5, comportant en outre un cadre métallique (200) adapté à se fixer sur ledit deuxième rebord (102) pour maintenir ladite unité (10) de rétro-éclairage par rapport au boîtier de montage (100).

7. Boîtier de montage (100) selon la revendication 6, dans lequel ledit cadre métallique (200) présente un profil en L inversé ayant une première partie (202) et une deuxième partie (203), ladite première partie (202) s'insérant dans une gorge (104) formée entre le premier rebord (101) et le deuxième rebord (102) et ladite deuxième partie (203) venant pincer le dispositif de rétro-éclairage (10) contre la paroi de fond (103).

8. Boîtier de montage (100) selon l'une des revendications 1 à 7, dans lequel ledit dispositif de rétro-éclairage (10) est entouré à sa périphérie par ledit deuxième rebord (102).

9. Ensemble afficheur (1) comportant un dispositif d'affichage (2) et un boîtier de montage (100) selon l'une des revendications 1 à 8 destiné à recevoir ledit dispositif d'affichage (2).

10. Ensemble afficheur (1) selon la revendication 9, comportant en outre un verre de façade (300) destiné à fermer le logement de réception (109) dudit boîtier de montage (100), ledit verre de façade (300) étant fixé au boîtier de montage (100) au niveau dudit premier rebord (101).

11. Ensemble afficheur (1) selon la revendication 10, dans lequel ledit écran (20) est situé entre ledit deuxième rebord (102) et ledit verre de façade (300).

12. Ensemble afficheur (1) selon l'une des revendications 9 à 11 comportant en outre un support de fixation (400) avec des moyens de fixation (403, 404, 405) sur ledit boîtier de montage (100) et des moyens de montage (402) sur une planche de bord d'un véhicule automobile.

## Patentansprüche

1. Montagegehäuse (100) für eine Anzeigevorrichtung (2) mit einer Hintergrundbeleuchtungseinheit (10) und einem Display (20), wobei das Montagegehäuse (100) umfasst:
- eine Rückwand (103);
- eine Seitenwand (101), die sich von der Rückwand (103) aus erhebt, um einen ersten Rand (101) zu bilden und einen Aufnahmesitz (109) zu begrenzen, der dazu bestimmt ist, die Anzeigevorrichtung (2) mindestens teilweise aufzunehmen;
- Montagemittel (102), die dazu bestimmt sind, mit komplementären Montagemitteln (200) der Anzeigevorrichtung (2) zusammenzuwirken, um mindestens die Einheit (10) in dem Aufnahmesitz zu befestigen, wobei die Montagemittel einen zweiten Rand (102) umfassen, der sich von der Rückwand (103) aus erhebt, wobei die Höhe (H2) des zweiten Rands (102) geringer als die Höhe (H1) des ersten Rands (101) ist, so dass das Umfangsprofil des Montagegehäuses (100) in Form eines asymmetrischen U ist, wobei die beiden Ränder die beiden Schenkel des asymmetrischen U darstellen,
**dadurch gekennzeichnet, dass** sich der zweite Rand (102) im Inneren des Aufnahmesitzes (109) erhebt, wobei das Verhältnis zwischen der Höhe (H2) des zweiten Rands (102) und der Höhe (H1) des ersten Rands (101) zwischen 0,3 und 0,7 beträgt.

2. Montagegehäuse (100) nach Anspruch 1, wobei, wenn der erste Rand (101) und der zweite Rand (102) eine erste Dicke (E1) beziehungsweise eine zweite Dicke (E2) aufweisen, das Verhältnis zwischen der zweiten Dicke (E2) und der ersten Dicke (E1) zwischen 0,3 und 0,9 beträgt.

3. Montagegehäuse (100) nach einem der Ansprüche 1 oder 2, wobei die erste Dicke (E1) des ersten Rands zwischen 1 Millimeter und 3 Millimeter beträgt.

4. Montagegehäuse (100) nach einem der Ansprüche 1 bis 3, wobei der Abstand (D12) zwischen dem ersten Rand (101) und dem zweiten Rand (102) zwischen 1 und 2 Millimeter beträgt.

5. Montagegehäuse (100) nach einem der Ansprüche 1 bis 4, wobei die Rückwand (103) des Montagegehäuses (100) eine Dicke zwischen 2 und 3 Millimeter aufweist.

6. Montagegehäuse (100) nach einem der Ansprüche 1 bis 5, umfassend ferner einen Metallrahmen (200), der dazu geeignet ist, an dem zweiten Rand (102) befestigt zu werden, um die Hintergrundbeleuchtungseinheit (10) in Bezug auf das Montagegehäuse (100) zu halten.

7. Montagegehäuse (100) nach Anspruch 6, wobei der Metallrahmen (200) ein Profil eines umgekehrten L aufweist, das einen ersten Teil (202) und einen zweiten Teil (203) hat, wobei der erste Teil (202) in eine Rille (104) eingeführt wird, die zwischen dem ersten Rand (101) und dem zweiten Rand (102) gebildet ist und der zweite Teil (203) die Hintergrundbeleuchtungsvorrichtung (10) gegen die Rückwand (103) klemmt.

8. Montagegehäuse (100) nach einem der Ansprüche 1 bis 7, wobei die Hintergrundbeleuchtungsvorrichtung (10) an ihrem Umfang von dem zweiten Rand (102) umgeben ist.

9. Anzeigeanordnung (1), umfassend eine Anzeigevorrichtung (2) und ein Montagegehäuse (100) nach einem der Ansprüche 1 bis 8, das dazu bestimmt ist, die Anzeigevorrichtung (2) aufzunehmen.

10. Anzeigeanordnung (1) nach Anspruch 9, umfassend ferner ein Frontglas (300), das dazu bestimmt ist, den Aufnahmesitz (109) des Montagegehäuses (100) zu verschließen, wobei das Frontglas (300) am Montagegehäuse (100) an dem ersten Rand (101) befestigt ist.

11. Anzeigeanordnung (1) nach Anspruch 10, wobei das Display (20) zwischen dem zweiten Rand (102) und dem Frontglas (300) gelegen ist.

12. Anzeigeanordnung (1) nach einem der Ansprüche 9 bis 11, umfassend ferner einen Befestigungsträger (400) mit Befestigungsmitteln (403, 404, 405) zur Befestigung an dem Montagegehäuse (100) und Montagemitteln (402) zur Montage an einer Instrumententafel eines Kraftfahrzeugs.

## Claims

1. Mounting housing (100) for a display device (2) comprising a back-lighting unit (10) and a screen (20), said mounting housing (100) comprising:
- a back wall (103);
- a side wall (101) standing up from the back wall (103) to form a first rim (101) and delimit a receiving space (109) intended to at least partially accommodate said display device (2);
- mounting means (102) intended to collaborate with complementary mounting means (200) of said display device (2) to fix at least said unit (10) in said receiving space, said mounting means comprising a second rim (102) standing up from the back wall (103), the height (H2) of the second rim (102) being less than the height (H1) of said first rim (101), so that the peripheral profile of the mounting housing (100) is in the shape of an asymmetric U, the two rims representing the two branches of the asymmetric U,
**characterized in that** the second rim (102) stands up inside said receiving space (109), the ratio between the height (H2) of the second rim (102) and the height (H1) of said first rim (101) being comprised between 0.3 and 0.7.

2. Mounting housing (100) according to Claim 1, wherein, with said first rim (101) and the second rim (102) respectively having a first thickness (E1) and a second thickness (E2), the ratio between the second thickness (E2) and the first thickness (E1) is comprised between 0.3 and 0.9.

3. Mounting housing (100) according to one of Claims 1 and 2, wherein the first thickness (E1) of the first rim is comprised between 1 millimetre and 3 millimetres.

4. Mounting housing (100) according to one of Claims 1 to 3, wherein the distance (D12) between the first rim (101) and the second rim (102) is comprised between 1 and 2 millimetres.

5. Mounting housing (100) according to one of Claims 1 to 4, wherein the back wall (103) of said mounting housing (100) has a thickness comprised between 2 and 3 millimetres.

6. Mounting housing (100) according to one of Claims 1 to 5, further comprising a metal frame (200) designed to be fixed to said second rim (102) in order to hold said back-lighting unit (10) in position with respect to the mounting housing (100).

7. Mounting housing (100) according to Claim 6, wherein said metal frame (200) has an inverted L-shaped profile having a first part (202) and a second part (203), said first part (202) being inserted into a groove (104) formed between the first rim (101) and the second rim (102), and said second part (203) clamping the back-lighting device (10) against the back wall (103).

8. Mounting housing (100) according to one of Claims 1 to 7, wherein said back-lighting device (10) is surrounded at its periphery by said second rim (102).

9. Display assembly (1) comprising a display device (2) and a mounting housing (100) according to one of Claims 1 to 8 intended to receive said display device (2).

10. Display assembly (1) according to Claim 9, further comprising a glass facade (300) intended to close the receiving space (109) of said mounting housing (100), said glass facade (300) being fixed to the mounting housing (100) at said first rim (101).

11. Display assembly (1) according to Claim 10, wherein said screen (20) is situated between said second rim (102) and said glass facade (300).

12. Display assembly (1) according to one of Claims 9 to 11, further comprising a fixing support (400) with means (403, 404, 405) for fixing it to said mounting housing (100) and means (402) for mounting it on a motor vehicle instrument panel.
